# FASCICULE DE BREVET EUROPEEN

(11) **EP 3 465 921 B1**
(45) Date de publication et mention de la délivrance du brevet: **27.07.2022**
(21) Numéro de dépôt: 17721678.5
(22) Date de dépôt: 05.05.2017
(51) Int. Cl.: H04B 1/401

(54) **PROCÉDÉS DE DÉTERMINATION DU MODE D'ESTIMATION DES DONNÉES REÇUES ET DE BASCULEMENT DE RÉCEPTION, PRODUIT PROGRAMME D'ORDINATEUR, MEDIUM DE STOCKAGE, DISPOSITIF D'ESTIMATION, UTILISATION ET TERMINAL CORRESPONDANTS**
VERFAHREN ZUR BESTIMMUNG DES MODUS DER SCHÄTZUNG VON EMPFANGENEN DATEN ZUR EMPFANGSUMSCHALTUNG, ZUGEHÖRIGES COMPUTERPROGRAMMPRODUKT, SPEICHERMEDIUM, SCHÄTZUNGSVORRICHTUNG, VERWENDUNG UND ENDGERÄT
METHODS FOR DETERMINING THE MODE OF ESTIMATION OF RECEIVED DATA AND FOR RECEPTION SWITCHING, CORRESPONDING COMPUTER-PROGRAM PRODUCT, STORAGE MEDIUM, ESTIMATING DEVICE, USE AND TERMINAL

(30) Priorité: 03.06.2016 FR 1655088
(43) Date de publication de la demande: 10.04.2019
(73) Titulaire: TDF, 92120 Montrouge (FR)
(72) Inventeur: ROY, Jean-Roger, 54610 Nomeny (FR)
(74) Mandataire: Vidon Brevets & Stratégie
(86) Numéro de dépôt international: PCT/EP2017/060762
(87) Numéro de publication internationale: WO 2017/207214

(56) Documents cités:
- EP-A1- 2 667 521
- EP-A2- 2 001 151
- EP-A2- 2 709 290
- WO-A1-01/50648
- US-A1- 2003 026 365
- US-A1- 2008 057 995

## Description

### 1 DOMAINE TECHNIQUE

Le domaine de l'invention est celui des systèmes de réception des données diffusées dans un réseau de radiodiffusion et comportant au moins deux récepteurs radiofréquences pouvant être syntonisés sur deux fréquences de réception différentes.

Plus précisément l'invention concerne un procédé de gestion de l'estimation des données reçues par un tel système lorsqu'il reçoit ces données via deux signaux radiofréquences centrés sur deux fréquences porteuses distinctes, ainsi qu'un procédé de basculement de réception souple d'une première fréquence de réception à une deuxième fréquence de réception, par exemple lors d'un changement de cellule d'un réseau de radiodiffusion du type « multifréquences », ou MFN (pour « Multi-Frequency Network » en anglais), i.e. un réseau qui associe des fréquences porteuses de diffusion distinctes à des cellules adjacentes.

L'invention trouve notamment des applications dans le domaine des réseaux de radiodiffusion numériques non conçus à l'origine pour faciliter la mobilité inter-cellules des récepteurs recevant les données diffusées. Il peut s'agir par exemple de réseaux de radiodiffusion numériques du type DVB (pour « Digital Video Broadcasting » en Anglais), DAB (pour « Digital Audio Broadcasting » en Anglais), DAB+, DRM (pour « Digital Radio Mondiale » en Anglais), DRM+, DMB (pour « Digital Multimedia Broadcasting » en Anglais), T- DMB (pour « Terrestrial-DMB » en Anglais), CCMB (pour « China Mobile Multimedia Broadcasting » en Anglais), ou autres.

### 2 ARRIERE-PLAN TECHNOLOGIQUE

Certains réseaux de radiodiffusion numériques MFN ne sont pas conçus pour gérer ou faciliter un basculement de réception « souple », i.e. sans interruption de réception, d'une fréquence porteuse à l'autre lors du changement de cellule d'un utilisateur.

C'est par exemple le cas des standards de radiodiffusion de télévision numérique du type DVB dont l'objectif premier est de diffuser un contenu à des récepteurs « fixes », par exemple localisés dans une habitation. Une conséquence directe de ce type d'application « fixe » est que l'architecture des récepteurs classiquement utilisée pour implémenter un tel standard est basée sur une seule voie de réception, i.e. sur un seul récepteur radiofréquence syntonisé sur la fréquence porteuse utilisée par l'émetteur de la cellule dans laquelle se trouve le récepteur.

Cependant, un besoin est rapidement apparu de pouvoir recevoir ce type de flux numérique en mobilité, par exemple dans un véhicule. Or, un tel réseau de radiodiffusion MFN associant des fréquences porteuses distinctes à des cellules adjacentes, il apparaît qu'une telle architecture de récepteur basée sur une seule voie de réception radiofréquence ne peut que conduire à une interruption de réception lors d'un changement de cellule, ne serait-ce que le temps de syntoniser le récepteur radiofréquence sur la nouvelle fréquence de réception.

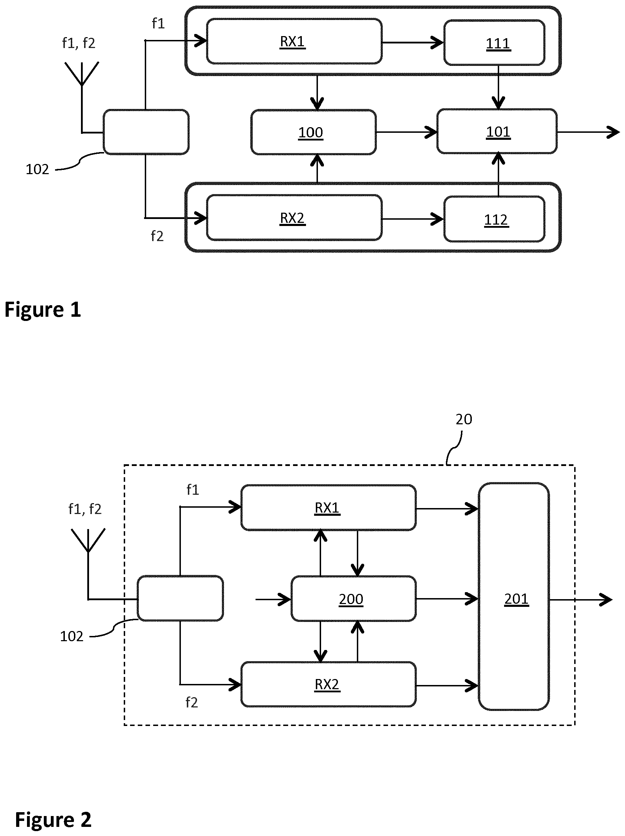

C'est pourquoi, des architectures de récepteur basées sur l'utilisation de deux voix de réception sont apparues comme par exemple celle représentée sur la **figure 1****.** Dans le cas où un tel récepteur connu se trouve être localisé dans une zone de recouvrement d'une première et d'une deuxième cellule diffusant sur les fréquences de diffusion f1 et f2 respectivement, une telle architecture permet en effet une réception simultanée des deux signaux radiofréquences diffusés sur les fréquences f1 et f2. Plus précisément, le répartiteur 102 permet d'aiguiller l'un de ces deux signaux reçus, par exemple celui centré sur f1, sur un premier récepteur radiofréquence RX1, et le deuxième de ces deux signaux reçus, par exemple celui centré sur f2, sur un deuxième récepteur radiofréquence RX2. Chacun de ces deux récepteurs radiofréquences délivre alors un signal transposé en bande de base (soit directement autour de la fréquence nulle, par exemple lorsque les récepteurs radiofréquences sont du type à conversion directe, ou ZIF (pour « Zero Intermediate Frequency » en anglais), soit centré autour d'une fréquence intermédiaire basse, par exemple lorsque les récepteurs radiofréquences sont du type à conversion vers une telle fréquence intermédiaire basse, ou low-IF (pour « low Intermediate Frequency » en anglais)) à des premier et deuxième modules d'estimation des données 111, 112 implémentant toutes les fonctions de démodulation classiquement rencontrées dans une chaine de réception dédiée aux communications numériques (estimation du canal, égalisation, décision symboles, etc.).

Dans cet exemple, le premier module 111 estime les données diffusées par la première cellule sur la fréquence f1, et le deuxième module 112 estime les données diffusées par la deuxième cellule sur la fréquence f2. Ces données sont alors transmises à un module de commutation 101 dont le but est d'aiguiller soit le flux de données issu du premier module d'estimation des données 111, soit le flux de données issu du deuxième module d'estimation des données 112, vers la sortie du système de réception et donc vers l'utilisateur.

Cette commutation est gérée par un module de gestion 100 qui base la décision de commutation sur des critères de qualité de service, ou QoS (pour « Quality of Service » en anglais), associés à la qualité de réception des données sur les deux fréquences f1 et f2. Il peut s'agir par exemple d'une indication de niveau du signal radiofréquence reçu, ou RSSI (pour « Received Signal Strength Indicator » en anglais), par chacun des deux récepteurs radiofréquences, ou du taux d'erreur paquets TEP ou binaire TEB associé aux données estimées par les premier et deuxième modules d'estimation des données 111, 112.

Cependant, il apparaît que cette commutation des données reçues sur chacune des voies de réception liée à l'utilisation de cette architecture connue conduit à une expérience utilisateur dégradée. Par exemple, des interruptions de flux peuvent apparaître de par la difficulté à gérer la synchronisation des deux flux de données délivrés par les premier et deuxième modules d'estimation des données 111, 112. De même, l'information contenue dans les deux signaux reçus aux fréquences f1 et f2 n'est pas utilisée de manière optimale pour déterminer les données diffusées dans le réseau. Par ailleurs, la gestion de la commutation entre les deux flux de données selon ce principe connu conduit à une grande complexité d'implémentation.

Des procédés de recombinaison des signaux reçus sont exposés dans EP 2709290 A2 ou EP 2001151 A2, par exemple.

Ainsi, il existe un besoin pour une méthode d'estimation des données diffusées dans un réseau de radiodiffusion du type MFN qui optimise l'utilisation de l'information reçue par les deux voies de réception lorsqu'elles sont syntonisées sur deux fréquences de réception distinctes.

Il existe par ailleurs un besoin d'améliorer l'expérience utilisateur en mobilité, et plus particulièrement lors du basculement de réception pendant un changement de cellule.

Il existe enfin un besoin pour qu'une telle méthode d'estimation des données et de basculement de réception soit économique pour adresser un marché grand publique.

### 3 RESUME

La portée de l'invention présente est définie par les revendications annexes.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 illustre un système de réception optimisé pour la réception dans un réseau de diffusion MFN selon une technique de l'art antérieur ;
- la figure 2 illustre un système de réception comprenant un dispositif d'estimation des données selon différents modes de réalisation de l'invention ;
- la figure 3 illustre les étapes d'un procédé de détermination du mode d'estimation des données reçues selon différents modes de réalisation de l'invention ;
- la figure 4 illustre un système d'hystérésis pouvant être utilisé dans un mode de réalisation du procédé de détermination du mode d'estimation des données selon différents modes de réalisation de l'invention ;
- la figure 5a illustre un exemple de configurations de réception associées à un utilisateur en mobilité dans un réseau de diffusion MFN ;
- la figure 5b illustre les étapes d'un procédé de basculement de réception sans interruption de service selon différents modes de réalisation de l'invention ;
- la figure 6 illustre un exemple de structure d'un dispositif de détermination du mode d'estimation des données reçues permettant la mise en œuvre du procédé de la figure 3.

### 5 DESCRIPTION DETAILLEE DE L'INVENTION

Sur toutes les figures du présent document, les éléments et étapes identiques sont désignés par une même référence.

Le principe général de la technique décrite consiste à déterminer le mode d'estimation des données reçues sur la base de deux récepteurs radiofréquences syntonisés sur une première et une deuxième fréquence de réception correspondant respectivement aux fréquences de diffusion d'une première et d'une deuxième cellule de réseau de diffusion MFN. Cependant, contrairement aux techniques de l'art antérieur, la technique décrite utilise une première et une deuxième informations de qualité associées aux signaux reçus par les deux récepteurs pour décider si l'estimation des données diffusées par le réseau est effectuée sur la seule base de l'un des deux signaux transposés en bande de base délivré par les deux récepteurs radiofréquences, ou sur la base d'une recombinaison de ces deux signaux transposés en bande de base. Par ailleurs, lorsque le système de réception comprenant les deux récepteurs radiofréquences est déplacé de la première cellule à la seconde, la technique décrite permet le basculement de réception de manière « souple » depuis un premier état dans lequel l'estimation des données est effectuée sur la seule base du signal transposé en bande de base correspondant au signal diffusé par la première cellule, à un second état dans lequel l'estimation des données est effectuée sur la seule base du signal transposé en bande de base correspondant au signal diffusé par la deuxième cellule, en passant par un état intermédiaire dans lequel l'estimation des données est effectuée sur la base d'une recombinaison des signaux transposés correspondant aux signaux diffusés par les première et deuxième cellules.

On décrit maintenant, en relation avec la **figure 2**, un terminal de réception 20 comprenant un dispositif de détermination du mode d'estimation des données selon différents modes de réalisation de l'invention.

Selon un mode de réalisation, le terminal de réception comprend un système de réception comprenant les deux récepteurs radiofréquences RX1, RX2. Le système de réception comprend en outre un module d'estimation des données 201. Contrairement aux premier et deuxième modules d'estimation des données 111, 112 de l'architecture connue décrite en relation avec la figure 1, le module d'estimation des données 201 fonctionne selon trois modes de fonctionnement distincts.

Dans un premier mode de fonctionnement, le module d'estimation 201 estime les données diffusées par le réseau sur la seule base du signal diffusé par la première cellule de diffusion sur la première fréquence de diffusion. Plus précisément, l'estimation des données est effectuée sur la base du signal transposé en bande de base par l'un des deux récepteurs radiofréquences (RX1, RX2), ici RX1, syntonisé sur la première fréquence de diffusion qui devient alors la première fréquence de réception.

Dans un second mode de fonctionnement, le module d'estimation 201 estime les données diffusées par le réseau sur la seule base du signal diffusé par la deuxième cellule de diffusion sur la deuxième fréquence de diffusion. Plus précisément, l'estimation des données est effectuée sur la base du signal transposé en bande de base par un des deux récepteurs radiofréquences (RX1, RX2), ici RX2, syntonisé sur la deuxième fréquence de diffusion qui devient alors la deuxième fréquence de réception.

Enfin, dans un troisième mode de fonctionnement, le module d'estimation 201 estime les données diffusées par le réseau sur la base d'une recombinaison des signaux transposés en bande de base par les deux récepteurs radiofréquences RX1 et RX2 syntonisés sur les première et deuxième fréquences de diffusion qui deviennent alors respectivement les première et deuxième fréquences de réception.

Ainsi, contrairement aux solutions connues, l'estimation des données est basée sur une utilisation optimisée de l'information contenue dans les deux signaux diffusés par les première et deuxième cellules du réseau et reçus par les deux récepteurs. En effet, ces signaux sont émis par des émetteurs géographiquement éloignés. Une diversité spatiale d'émission est alors attendue. Mais ces signaux sont également diffusés sur des fréquences porteuses f1, f2 distinctes. Une diversité fréquentielle est alors également attendue en plus de la diversité spatiale. Une estimation des données reçues sur la base d'un traitement conjoint des deux signaux transposés en bande de base délivrés par les deux récepteurs radiofréquences permet alors d'optimiser la qualité des données délivrées par le module d'estimation 201.

Plus précisément, un gain de traitement peut être attendu par rapport au traitement d'un seul des deux signaux reçu. Ainsi, sous l'hypothèse que les deux signaux reçus sont parfaitement décorrélés du fait de la diversité spatiale d'émission et fréquentielle, un gain de 3dB peut être attendu en terme d'amélioration de niveau de signal utile équivalent à l'entrée du système de réception.

Dans un mode de réalisation, l'estimation des données prenant en compte les deux signaux transposés en bande de base délivrés par les deux récepteurs radiofréquences est basée sur une technique de combinaison à rapport maximal, ou MRC (pour « Maximum-Ratio Combining » en anglais), bien connue de l'homme du métier, permettant ainsi une mise en œuvre simple est maitrisée de la technique décrite. Une telle technique est par exemple décrite dans l'article de A K M Arifuzzman, Md. Anwar Hossain, Nadia Nowshin et Mohammed Tarique, « A comparative performance analysis of MRC diversity receivers in OFDM system », International Journal of Distributed and Parallel Systems (IJDPS) Vol.2, No.4, July 2011.

Dans une variante, les données diffusées par le réseau dans les première et deuxième cellules sont synchronisées en temps. L'implémentation du module d'estimation 201 se trouve ainsi simplifiée. En effet, le temps de propagation radio entre les émetteurs radio et le système de réception étant négligeable devant le temps symbole dans les réseaux de diffusion existants, un alignement temporel des données diffusées dans les différentes cellules du réseau permet de s'affranchir de moyens de resynchronisation des signaux transposés en bande de base délivrés par les différents récepteurs radiofréquences du système de réception avant recombinaison. En particulier, il devient envisageable d'utiliser des circuits existants pour la réception en diversité spatiale de réception pour peu que les deux récepteurs radiofréquences embarqués dans ces circuits soient aptes à être syntonisés sur deux fréquences de réception distinctes. Cela pourrait être le cas des circuits proposés par les constructeurs Siano (SMS4470) ou Parrot (Octopus 3), moyennant une légère modification des fonctionnalités liées aux couches logicielles intermédiaires, ou « middleware ». Un tel mode de réalisation de la technique décrite est alors particulièrement avantageux en termes de complexité et de coût de la solution.

Le terminal de réception représenté sur la figure 2, comprend également un dispositif 200 de détermination du mode d'estimation des données reçues, afin de déterminer lequel des trois modes de fonctionnement décrits ci-dessus doit être mis en œuvre.

Pour permettre la détermination du mode d'estimation, le dispositif 200 prend en compte :
- des première et deuxième informations IQ1, IQ2 représentatives de la qualité de réception sur chacune des voies de réception du système. Suivant des variantes de mise en œuvre, il peut s'agir :
   ∘ du RSSI renvoyé par chacun des récepteurs radiofréquences RX1 et RX2 du système ;
   ∘ du TEP ou du TEB lié à chacune des voies de réception ;
   ∘ d'une information de QoS fournie par une couche applicative supérieure et associée à chacune des voies de réception.
- une information représentative des fréquences à utiliser pour pouvoir syntoniser les deux récepteurs radiofréquences RX1, RX2. Suivant des variantes de mise en œuvre, il peut s'agir :
   ∘ de fréquences préprogrammées dans le système ;
   ∘ de fréquences signalées directement par le réseau.

Sur la base de ces informations, le dispositif de détermination 200 délivre :
- une information représentative de la fréquence de syntonisation à utiliser par les deux récepteurs radiofréquences RX1, RX2 ;
- une décision du mode d'estimation des données reçues appartenant au groupe indiquant si l'estimation des données reçues est basée :
   ∘ sur une recombinaison des signaux transposés en bande de base délivrés par les deux récepteurs radiofréquences RX1, RX2 (troisième mode de fonctionnement décrit ci-dessus) ;
   ∘ uniquement sur le signal transposé en bande de base délivré par le récepteur radiofréquence syntonisé sur la première fréquence de diffusion (premier mode de fonctionnement décrit ci-dessus) ;
   ∘ uniquement sur le signal transposé en bande de base délivré par le récepteur radiofréquence syntonisé sur la deuxième fréquence de diffusion (deuxième mode de fonctionnement décrit ci-dessus).

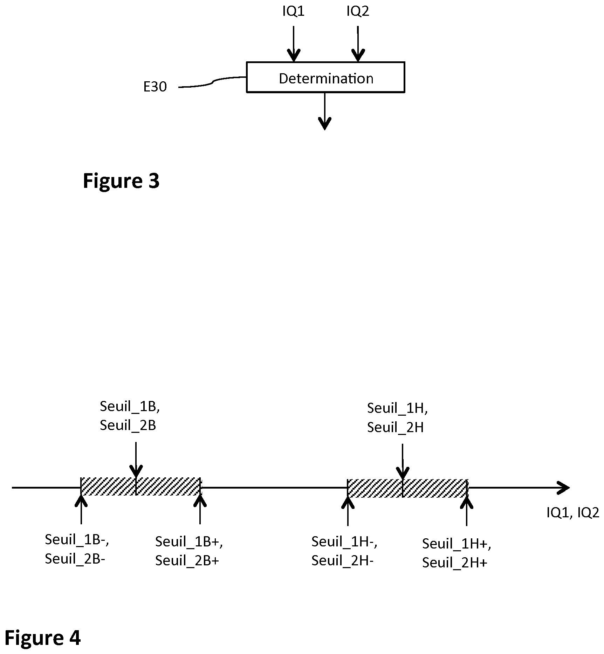

On décrit maintenant, en relation avec les **figures 3 et 4****,** les étapes d'un procédé de détermination du mode d'estimation des données reçues selon différents modes de réalisation de l'invention ainsi qu'un système d'hystérésis pouvant être associé.

Dans un mode de réalisation, le procédé de détermination du mode d'estimation prend en compte les première et deuxième informations représentatives de la qualité de réception IQ1, IQ2 sur chacune des voies de réception du système/terminal pour déterminer le mode d'estimation des données reçues.

Pour ce faire, lors d'une étape E30, le dispositif de détermination 200 compare la première information représentative de la qualité de réception du signal diffusé dans la première cellule sur la première fréquence de diffusion à un premier seuil bas, seuil_1B, et à un premier seuil haut, seuil_1H, avec seuil_1B inférieur ou égal à seuil_1H.

De même, le dispositif de détermination 200 compare la deuxième information représentative de la qualité de réception du signal diffusé dans la deuxième cellule sur la deuxième fréquence de diffusion à un deuxième seuil bas, seuil_2B, et à un deuxième seuil haut, seuil_2H, avec seuil_2B inférieur ou égal à seuil_2H.

Plus précisément :
- si IQ1 est supérieure à seuil_1B, et si IQ2 est supérieure à seuil_2B, l'estimation des données reçues est basée sur une recombinaison des signaux transposés en bande de base délivrés par les deux récepteurs radiofréquences RX1, RX2 syntonisés sur les deux fréquences de diffusion distinctes (troisième mode de fonctionnement décrit ci-dessus) ;
- si IQ1 est inférieure ou égale à seuil_1B, et si IQ2 est supérieure à seuil_2B, l'estimation des données reçues est basée sur le signal transposé en bande de base délivré par le récepteur radiofréquence syntonisé sur la deuxième fréquence de diffusion (deuxième mode de fonctionnement décrit ci-dessus) ;
- si IQ1 est supérieure audit seuil_1B, et si IQ2 est inférieure ou égale à seuil_2B, l'estimation des données reçues est basée sur le signal transposé en bande de base délivré par le récepteur radiofréquence syntonisé sur la première fréquence de diffusion (premier mode de fonctionnement décrit ci-dessus).

Ainsi, si la réception sur les deux fréquences distinctes est considérée comme suffisamment bonne simultanément, l'estimation des données reçues se fait sur la base de ces deux signaux conjointement, recombinés, optimisant ainsi l'usage de l'information contenue dans les signaux transposés en bande de base par les récepteurs radiofréquences syntonisés sur les deux fréquences de réception pour estimer les données reçues.

Dans une variante :
- si IQ1 ou IQ2 est supérieure respectivement à seuil_1H ou à seuil_2H, l'estimation de l'information reçue est basée uniquement sur le signal transposé en bande de base correspondant à IQ1 ou IQ2 ;
- si IQ1 et IQ2 sont supérieures respectivement à seuil_1H et à seuil_2H, l'estimation de l'information reçue est basée uniquement sur le signal transposé en bande de base sur lequel était basée l'estimation des données reçues suite à une exécution précédente de l'étape de détermination du mode d'estimation des données reçues.

Ainsi, si la réception sur une des fréquences de diffusion est suffisamment bonne pour que les données estimées sur la base de ce signal soient considérées comme suffisamment fiables, l'estimation des données est effectuée uniquement sur la base de ce signal. Ainsi, le deuxième récepteur radiofréquence peut être mis dans une position d'attente et l'estimation des données reçues peut se faire de manière simplifiée tout en minimisant la consommation en énergie du système de réception

Dans une autre variante, si IQ1 ou IQ2 sont inférieures ou égales respectivement à seuil_1B ou à seuil_2B, le dispositif de détermination 200 délivre une information de scanning d'une fréquence différente de la première ou deuxième fréquence de diffusion au récepteur radiofréquence RX1, RX2 correspondant, permettant par là-même la gestion des fréquences de réception à utiliser.

Dans des variantes, seuil_1B est égal à seuil_2B et/ou seuil_1H est égal à seuil_2H, ce qui permet de simplifier l'implémentation et la gestion du procédé décrit.

Dans une autre variante, les seuils seuil_1B, seuil_2B, seuil_1H et seuil_2H sont définis de manière relative à un troisième seuil, seuil_0, permettant ainsi une gestion plus simple de ces seuils en référence à une grandeur physique caractéristique des récepteurs radiofréquences RX1, RX2 comme leur seuil de sensibilité par exemple.

Dans une autre variante, une hystérésis est utilisée sur les seuils bas et haut définis précédemment. Cette technique bien connue de l'homme du métier permet de s'affranchir des phénomènes d'oscillation dans la décision du mode d'estimation délivrée par le dispositif de détermination 200, ce type d'oscillation entrainant une dégradation de l'estimation des données au final.

Pour se faire, des seuils bas dits négatifs, seuil_1B- et seuil_2B-, et positifs, seuil_1B+ et seuil_2B+, sont définis de manière à être inférieurs et supérieurs aux seuils bas seuil_1B et seuil_2B respectivement. De même des seuils haut dits négatifs, seuil_1H- et seuil_2H-, et positifs, seuil_1H+ et seuil_2H+, sont définis de manière à être inférieurs et supérieurs aux seuils haut seuil_1H et seuil_2H respectivement.

Ainsi, lorsque IQ1, respectivement IQ2, croit, les seuils bas et haut (seuil_1B et seuil_1H, ainsi que seuil_2B et seuil_2H respectivement) ne sont réputés franchis que si IQ1, respectivement IQ2, sont supérieurs au seuils bas et haut positifs correspondants. Réciproquement, lorsque IQ1, respectivement IQ2, décroit, les seuils bas et haut (seuil_1B et seuil_1H, ainsi que seuil_2B et seuil_2H respectivement) ne sont réputés franchis que si IQ1, respectivement IQ2, sont inférieurs au seuils bas et haut négatifs correspondants.

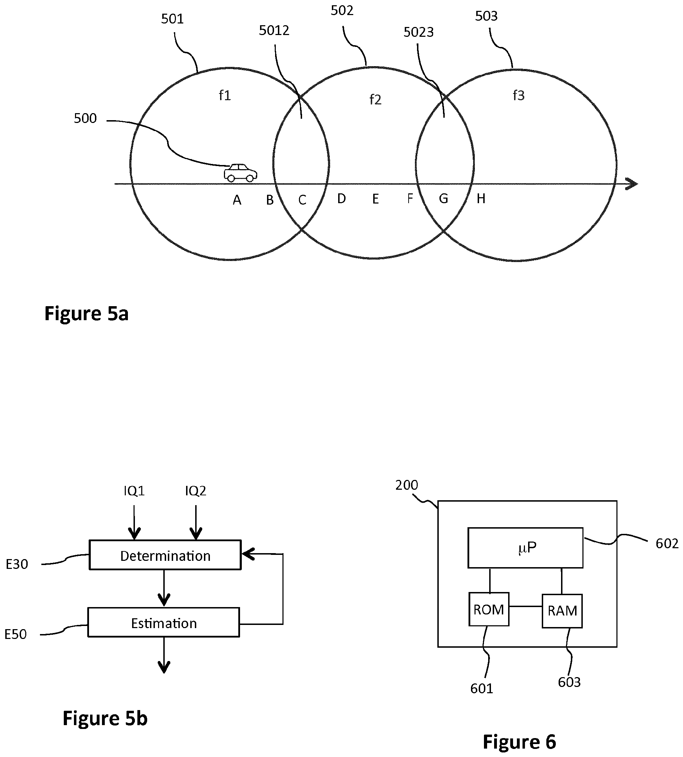

On décrit maintenant, en relation avec les **figures 5a et 5b****,** un exemple de configurations de réception associées à un utilisateur en mobilité dans un réseau de diffusion MFN ainsi que les étapes associées d'un procédé de basculement de réception sans interruption de service selon différents modes de réalisation de l'invention.

Plus précisément, il s'agit ici du terminal de réception 20 décrit ci-dessus en relation avec la figure 2, embarqué dans un véhicule 500 se déplaçant dans un réseau de radiodiffusion MFN constitué de trois cellules 501, 502, 503 diffusant les données sur trois fréquences f1, f2, f3 respectivement.

Lors de ce déplacement, le véhicule 500 passe successivement par les positions :
- A, située au centre de la première cellule 501 ;
- B, située dans la première cellule 501 diffusant sur la première fréquence f1, mais en bordure de la deuxième cellule 502 diffusant sur la fréquence deuxième f2 ;
- C, située dans la zone de recouvrement 5012 de la première cellule 501 et de la deuxième cellule 502 ;
- D, située dans la deuxième cellule 502, mais en bordure de la première cellule 501 ;
- E, située au centre de la deuxième cellule 502 ;
- F, située dans la deuxième cellule 502, mais en bordure de la troisième cellule 503 diffusant sur la troisième fréquence f3 ;
- G, située dans la zone de recouvrement 5023 de la deuxième cellule 502 et de la troisième cellule 503 ; et
- H, située dans la troisième cellule 503, mais en bordure de la deuxième cellule 502.

Les tableaux 1 et 2 ci-après donnent alors les valeurs d'informations IQ1 et IQ2 (par rapport aux seuils haut et bas correspondants) obtenues lors de ce déplacement, ainsi que les décisions de mode d'estimation délivrées par le dispositif de détermination 200 lors de la mise en œuvre de l'étape de décision E30 (décrite ci-dessus en relation avec les figures 3 et 4) dans les différentes conditions rencontrées par le véhicule lors de ce déplacement. Les informations de syntonisation pour les deux récepteurs radiofréquences RX1 et RX2 correspondant aux différents modes d'estimations ainsi déterminés pendant le déplacement sont également indiquées dans ces tableaux.

**Tableau 1**

| Position véhicule | A | B | C | D |
|---|---|---|---|---|
| IQ1 | > Seuil_1H | > Seuil_1H | > Seuil_1B et < Seuil_1H | > Seuil_1B et < Seuil_1H |
| IQ2 | < Seuil_2B | > Seuil_2B et < Seuil_2H | > Seuil_2B et < Seuil_2H | > Seuil_2H |
| décision du mode d'estimation | Signal transposé en bande de base par RX1 seulement | Signal transposé en bande de base par RX1 seulement | Combinaison des signaux transposés en bande de base par RX1 et RX2 | Signal transposé en bande de base par RX2 seulement |
| Syntonisation RX1 | f1 | f1 | f1 | f1 |
| Syntonisation RX2 | Test f2, f3 | Syntonisation f2 | f2 | f2 |

**Tableau 2**

| Position véhicule | E | F | G | H |
|---|---|---|---|---|
| IQ1 | < Seuil_1B. _ | Seuil_1B < x < Seuil_1H | Seuil_1B < x < Seuil_1H | > Seuil_1H _ |
| IQ2 | > Seuil_2H | > Seuil_2H | > Seuil_2B et < Seuil_2H | > Seuil_2B et < Seuil_2H |
| décision du mode d'estimation | Signal transposé en bande de base par RX2 seulement | Signal transposé en bande de base par RX2 seulement | Combinaison des signaux en transposés en bande de base par RX1 et RX2 | Signal transposé bande de base par RX1 seulement |
| Syntonisation RX1 | Test f3, f1 | Syntonisation f3 | f3 | f3 |
| Syntonisation RX2 | f2 | f2 | f2 | f2 |

Les données reçues sont alors estimées par le module d'estimation des données 201 lors de la mise en œuvre d'une étape d'estimation E50 sur la base du ou des signaux transposés en bande de base par l'un ou l'autre ou les deux récepteurs radiofréquences RX1 et RX2 suivant la décision délivrée par le dispositif de détermination 200.

L'enchainement des étapes E30 et E50 se fait ainsi de manière itérative lors du déplacement des positions A à E de sorte que la technique décrite permet au terminal composé des deux récepteurs radiofréquences de basculer sa réception de manière souple depuis la réception sur la fréquence f1 seule, jusqu'à la réception sur la fréquence f2 seule, en passant par une étape intermédiaire de détermination des données diffusées sur la base de la recombinaison des signaux transposés en bande de base délivrés par les deux récepteurs radiofréquences syntonisés sur les fréquences f1 et f2. Le même processus se déroule lors du passage de la deuxième cellule 502 à la troisième cellule 503.

Ainsi, le basculement de réception se fait de manière « souple », i.e. sans interruption de service pour l'utilisateur final, tout en optimisant son expérience de par l'optimisation de l'estimation des données reçues via le traitement conjoint des deux signaux transposés en bande de base par les deux récepteurs radiofréquences dans les zones de recouvrement des cellules, zones qui sont souvent des zones de réception difficile car se trouvant en bord de cellule.

La **figure 6** présente un exemple de structure du dispositif 200 de détermination du mode d'estimation des données reçues, permettant la mise en œuvre du procédé de la figure 3.

Le dispositif 200 comprend une mémoire vive 603 (par exemple une mémoire RAM), une unité de traitement 602 équipée par exemple d'un processeur, et pilotée par un programme d'ordinateur stocké dans une mémoire morte 601 (par exemple une mémoire ROM ou un disque dur). A l'initialisation, les instructions de code du programme d'ordinateur sont par exemple chargées dans la mémoire vive 603 avant d'être exécutées par le processeur de l'unité de traitement 602.

Cette figure 6 illustre seulement une manière particulière, parmi plusieurs possibles, de réaliser le dispositif 200, afin qu'il effectue certaines étapes du procédé détaillé ci-dessus, en relation avec la figure 3 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 200 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de détermination du mode d'estimation des données reçues par un système comprenant au moins deux récepteurs radiofréquences (RX1, RX2) syntonisés respectivement sur une première fréquence de réception et sur une deuxième fréquence de réception, lesdites première et deuxième fréquences de réception étant distinctes,
**caractérisé en ce qu'**il comprend une étape de détermination (E30) du mode d'estimation desdites données reçues, délivrant une décision de recombiner, pour l'estimation desdites données reçues, de premier et deuxième signaux transposés en bande de base délivrés respectivement par lesdits au moins deux récepteurs radiofréquences, ladite décision tenant compte d'au moins une première (IQ1) et une deuxième (IQ2) informations de qualité associées à un signal reçu respectivement sur lesdites première et deuxième fréquences de réception, ladite décision de recombiner correspondant à une décision indiquant que l'estimation desdites données reçues est basée sur :
• une recombinaison desdits premier et deuxième signaux transposés en bande de base si ladite première information de qualité est supérieure à un premier seuil bas et si ladite deuxième information de qualité est supérieure à un deuxième seuil bas ;
• ledit deuxième signal transposé en bande de base si ladite première information de qualité est inférieure ou égale audit premier seuil bas et si ladite deuxième information de qualité est supérieure audit deuxième seuil bas ;
• ledit premier signal transposé en bande de base si ladite première information de qualité est supérieure audit premier seuil bas et si ladite deuxième information de qualité est inférieure ou égale audit deuxième seuil bas.

2. Procédé de détermination du mode d'estimation selon la revendication 1 dans lequel ladite décision de recombiner est mise à jour et correspond à une décision indiquant que l'estimation desdites données reçues est basée sur :
• ledit premier signal transposé en bande de base si ladite première information de qualité est supérieure à un premier seuil haut et si ladite deuxième information de qualité est inférieure ou égale à un deuxième seuil haut;
• ledit deuxième signal transposé en bande de base si ladite deuxième information de qualité est supérieure audit deuxième seuil haut et si ladite première information de qualité est inférieure ou égale audit premier seuil haut ;
• sur un signal transposé en bande de base sur lequel était basée l'estimation desdites données reçues suite à une exécution précédente de ladite étape de détermination du mode d'estimation desdites données reçues si lesdites première et deuxième informations de qualité sont respectivement supérieures auxdits premier et deuxième seuils hauts.

3. Procédé de détermination du mode d'estimation selon l'une quelconque des revendications précédentes comprenant en outre, si ladite première ou deuxième information de qualité est inférieure ou égale audit premier ou deuxième seuil bas, une étape de transmission, audit premier ou deuxième récepteur radiofréquence, d'une information de scanning d'au moins une fréquence différente de ladite première ou deuxième fréquence de réception.

4. Procédé de détermination du mode d'estimation selon l'une quelconque des revendications précédentes dans lequel lorsque ladite décision de recombiner correspond à une décision de recombinaison, ladite recombinaison correspond à une recombinaison à rapport maximum desdits signaux transposés en bande de base.

5. Procédé de basculement de réception sans interruption de service d'un système comprenant au moins deux récepteurs radiofréquences (RX1, RX2) syntonisés respectivement sur une première fréquence de réception et sur une deuxième fréquence de réception, lesdites première et deuxième fréquences de réception étant distinctes, ledit procédé étant mis en œuvre lors du passage dudit système d'une première cellule (501) d'un réseau de diffusion à une deuxième cellule (502) dudit réseau, ladite première cellule diffusant sur une première fréquence de diffusion et ladite deuxième cellule diffusant sur une deuxième fréquence de diffusion distincte de ladite première fréquence de diffusion, **caractérisé en ce qu'**il comprend :
• au moins trois étapes de détermination (E30) du mode d'estimation des données diffusées par ledit réseau selon l'une quelconque des revendications 1 à 4, lesdites trois étapes de détermination du mode d'estimation étant mises en œuvre successivement respectivement lorsque ledit système est localisé dans ladite première cellule, lorsque ledit système est localisé dans une zone de recouvrement desdites première et deuxième cellules et lorsque ledit système est localisé dans ladite deuxième cellule et trois étapes d'estimation desdites données, lesdites première et deuxième fréquences de réception correspondant respectivement auxdites première et deuxième fréquences de diffusion,
• au moins trois étapes d'estimation (E50) desdites données reçues tenant compte respectivement des décisions de recombiner délivrées lors desdites trois étapes de détermination du mode d'estimation.

6. Procédé de basculement selon la revendication 5 dans lequel lesdites fréquences de syntonisation appartiennent au groupe comprenant :
• des fréquences préprogrammées dans ledit système ;
• des fréquences signalées par ledit réseau.

7. Procédé de basculement selon l'une quelconque des revendications 5 ou 6 dans lequel les données diffusées par ledit réseau dans lesdites première et deuxième cellules sont synchronisées en temps.

8. Procédé de basculement selon l'une quelconque des revendications 5 à 7 dans lequel ledit réseau est un réseau de radiodiffusion vidéo numérique du type « réseau multifréquences ».

9. Produit programme d'ordinateur, comprenant des instructions de code de programme pour la mise en œuvre d'un procédé selon au moins une des revendications 1 à 8, lorsque ledit programme est exécuté sur un ordinateur.

10. Médium de stockage lisible par ordinateur et non transitoire, stockant un produit programme d'ordinateur selon la revendication 9.

11. Dispositif (200) de détermination du mode d'estimation des données reçues par un système comprenant au moins deux récepteurs radiofréquences (RX1, RX2) syntonisés respectivement sur une première fréquence de réception et sur une deuxième fréquence de réception, lesdites première et deuxième fréquences de réception étant distinctes,
**caractérisé en ce qu'**il comprend des moyens de détermination (602) du mode d'estimation desdites données reçues délivrant une décision de recombiner, pour l'estimation desdites données reçues, de premier et deuxième signaux transposés en bande de base délivrés respectivement par lesdits au moins deux récepteurs radiofréquences, ladite décision tenant compte d'au moins une première (IQ1) et une deuxième (IQ2) informations de qualité associées à un signal reçu respectivement sur lesdites première et deuxième fréquences de réception et ladite décision indiquant que l'estimation desdites données reçues est basée sur :
• une recombinaison desdits premier et deuxième signaux transposés en bande de base si ladite première information de qualité est supérieure à un premier seuil bas et si ladite deuxième information de qualité est supérieure à un deuxième seuil bas ;
• ledit deuxième signal transposé en bande de base si ladite première information de qualité est inférieure ou égale audit premier seuil bas et si ladite deuxième information de qualité est supérieure audit deuxième seuil bas ;
• ledit premier signal transposé en bande de base si ladite première information de qualité est supérieure audit premier seuil bas et si ladite deuxième information de qualité est inférieure ou égale audit deuxième seuil bas.

12. Utilisation d'un dispositif (200) selon la revendication 11 pour le basculement de réception sans interruption de service lors du passage dudit système d'une première cellule (501) d'un réseau de diffusion à une deuxième cellule (502) dudit réseau, ladite première cellule diffusant sur une première fréquence de diffusion et ladite deuxième cellule diffusant sur une deuxième fréquence de diffusion distincte de ladite première fréquence de diffusion, lesdites première et deuxième fréquences de réception correspondant respectivement auxdites première et deuxième fréquences de diffusion, **caractérisée en ce qu'**elle met en œuvre au moins trois étapes de détermination du mode d'estimation des données diffusées par ledit réseau, respectivement lorsque ledit système est localisé dans ladite première cellule, lorsque ledit système est localisé dans une zone de recouvrement desdites première et seconde cellules et lorsque ledit système est localisé dans ladite deuxième cellule.

13. Terminal de réception (20) comprenant un système comprenant au moins deux récepteurs radiofréquences (RX1, RX2) syntonisés respectivement sur une première fréquence de réception et sur une deuxième fréquence de réception, lesdites première et deuxième fréquences de réception étant distinctes,
**caractérisé en ce qu'**il comprend un dispositif (200) selon la revendication 11 de détermination du mode d'estimation des données reçues par ledit système.

## Patentansprüche

1. Verfahren zur Bestimmung des Modus der Schätzung der von einem System empfangenen Daten, umfassend mindestens zwei Funkfrequenzempfänger (RX1, RX2), die auf eine erste Empfangsfrequenz bzw. eine zweite Empfangsfrequenz abgestimmt sind, wobei die erste und zweite Empfangsfrequenz unterschiedlich sind,
**dadurch gekennzeichnet, dass** es einen Schritt der Bestimmung (E30) des Modus der Schätzung der empfangenen Daten umfasst, der für die Schätzung der empfangenen Daten eine Entscheidung zur Rekombination von ersten und zweiten ins Basisband verschobenen Signalen, die jeweils von den mindestens zwei Funkfrequenzempfängern geliefert wurden, liefert, wobei die Entscheidung mindestens eine erste (IQ1) und eine zweite (IQ2) Qualitätsinformation berücksichtigt, die einem auf der ersten bzw. zweiten Empfangsfrequenz empfangenen Signal zugeordnet ist, wobei die Rekombinationsentscheidung einer Entscheidung entspricht, die angibt, dass die Schätzung der empfangenen Daten basiert auf:
* einer Rekombination der ersten und zweiten ins Basisband verschobenen Signale, wenn die erste Qualitätsinformation höher als eine erste untere Grenze ist, und wenn die zweite Qualitätsinformation höher als eine zweite untere Grenze ist;
* dem zweiten ins Basisband verschobenen Signal, wenn die erste Qualitätsinformation niedriger oder gleich der ersten unteren Grenze ist, und wenn die zweite Qualitätsinformation höher als die zweite untere Grenze ist;
* dem ersten ins Basisband verschobenen Signal, wenn die erste Qualitätsinformation höher als die erste untere Grenze ist, und wenn die zweite Qualitätsinformation niedriger oder gleich der zweiten unteren Grenze ist.

2. Verfahren zur Bestimmung des Modus der Schätzung nach Anspruch 1, bei dem die Rekombinationsentscheidung aktualisiert wird und einer Entscheidung entspricht, die angibt, dass die Schätzung der empfangenen Daten basiert auf:
* dem ersten ins Basisband verschobenen Signal, wenn die erste Qualitätsinformation höher als eine erste obere Grenze ist, und wenn die zweite Qualitätsinformation niedriger oder gleich der zweiten oberen Grenze ist,
* dem zweiten ins Basisband verschobenen Signal, wenn die zweite Qualitätsinformation höher als die zweite obere Grenze ist, und wenn die erste Qualitätsinformation niedriger oder gleich der ersten oberen Grenze ist;
* auf einem ins Basisband verschobenen Signal, auf dem die Schätzung der empfangenen Daten nach einer vorhergehenden Ausführung des Schrittes der Bestimmung des Modus der Schätzung der empfangenen Daten basierte, wenn die ersten und zweiten Qualitätsinformationen höher als die ersten bzw. zweiten oberen Grenzen sind.

3. Verfahren zur Bestimmung des Modus der Schätzung nach einem der vorhergehenden Ansprüche, ferner umfassend, wenn die erste oder zweite Qualitätsinformation niedriger oder gleich der ersten oder zweiten unteren Grenze ist, einen Schritt der Übertragung einer Scanning-Information mindestens einer anderen Frequenz als der ersten oder zweiten Empfangsfrequenz an den ersten oder zweiten Funkfrequenzempfänger.

4. Verfahren zur Bestimmung des Modus der Schätzung nach einem der vorhergehenden Ansprüche, bei dem, wenn die Entscheidung zu rekombinieren einer Rekombinationsentscheidung entspricht, die Rekombination einer Rekombination mit maximalem Verhältnis der ins Basisband verschobenen Signale entspricht.

5. Verfahren zur Empfangsumschaltung ohne Dienstunterbrechung eines Systems, umfassend mindestens zwei Funkfrequenzempfänger (RX1, RX2), die auf eine erste Empfangsfrequenz bzw. eine zweite Empfangsfrequenz abgestimmt sind, wobei die erste und zweite Empfangsfrequenz unterschiedlich sind, wobei das Verfahren beim Übergang des Systems von einer ersten Zelle (501) eines Rundfunknetzes zu einer zweiten Zelle (502) des Netzes eingesetzt wird, wobei die erste Zelle auf einer ersten Funkfrequenz funkt und die zweite Zelle auf einer zweiten, zur ersten Funkfrequenz unterschiedlichen Funkfrequenz funkt, **dadurch gekennzeichnet, dass** es umfasst:
* mindestens drei Schritte der Bestimmung (E30) des Modus der Schätzung der von dem Netz gefunkten Daten nach einem der Ansprüche 1 bis 4, wobei die drei Schritte der Bestimmung des Modus der Schätzung nacheinander eingesetzt werden, wenn das System in der ersten Zelle lokalisiert ist, wenn das System in einer Überlappungszone der ersten und zweiten Zellen lokalisiert ist, bzw. wenn das System in der zweiten Zelle lokalisiert ist, und drei Schritte der Schätzung der Daten, wobei die erste und zweite Empfangsfrequenz den ersten bzw. zweiten Funkfrequenzen entsprechen,
* mindestens drei Schritte der Schätzung (E50) der empfangenen Daten unter jeweiliger Berücksichtigung der Rekombinationsentscheidungen, die bei den drei Schritten der Bestimmung des Modus der Schätzung geliefert werden.

6. Umschaltungsverfahren nach Anspruch 5, bei dem die Abstimmungsfrequenzen der Gruppe angehören, umfassend:
* von dem System vorprogrammierte Frequenzen;
* vom Netz signalisierte Frequenzen.

7. Umschaltungsverfahren nach einem der Ansprüche 5 oder 6, bei dem die von dem Netz in den ersten und zweiten Zellen gefunkten Daten zeitlich synchronisiert sind.

8. Umschaitungsverfahren nach einem der Ansprüche 5 bis 7, bei dem das Netz ein digitales Videofunknetz des Typs "Multifrequenznetz" ist.

9. Computerprogrammprodukt, umfassend Programmcodeanweisungen für den Einsatz eines Verfahrens nach mindestens einem der Ansprüche 1 bis 8, wenn das Programm auf einem Computer ausgeführt wird.

10. Von einem Computer lesbares und nicht transientes Speichermedium, das ein Computerprogrammprodukt nach Anspruch 9 speichert.

11. Vorrichtung (200) zur Bestimmung des Modus der Schätzung der von einem System empfangenen Daten, umfassend mindestens zwei Funkfrequenzempfänger (RX1, RX2), die auf eine erste Empfangsfrequenz bzw. eine zweite Empfangsfrequenz abgestimmt sind, wobei die erste und zweite Empfangsfrequenz unterschiedlich sind,
**dadurch gekennzeichnet, dass** sie Mittel zur Bestimmung (602) des Modus der Schätzung der empfangenen Daten umfasst, die für die Schätzung der empfangenen Daten eine Entscheidung zur Rekombination von ersten und zweiten ins Basisband verschobenen Signalen, die jeweils von den mindestens zwei Funkfrequenzempfängern geliefert wurden, liefert, wobei die Entscheidung mindestens eine erste (IQ1) und eine zweite (IQ2) Qualitätsinformation berücksichtigt, die einem auf der ersten bzw. zweiten Empfangsfrequenz empfangenen Signal zugeordnet ist, wobei die Rekombinationsentscheidung angibt, dass die Schätzung der empfangenen Daten basiert auf:
* einer Rekombination der ersten und zweiten ins Basisband verschobenen Signale, wenn die erste Qualitätsinformation höher als eine erste untere Grenze ist, und wenn die zweite Qualitätsinformation höher als eine zweite untere Grenze ist;
* dem zweiten ins Basisband verschobenen Signal, wenn die erste Qualitätsinformation niedriger oder gleich der ersten unteren Grenze ist, und wenn die zweite Qualitätsinformation höher als die zweite untere Grenze ist;
* dem ersten ins Basisband verschobenen Signal, wenn die erste Qualitätsinformation höher als die erste untere Grenze ist, und wenn die zweite Qualitätsinformation niedriger oder gleich der zweiten unteren Grenze ist.

12. Verwendung einer Vorrichtung (200) nach Anspruch 11 zur Empfangsumschaltung ohne Dienstunterbrechung beim Übergang des Systems von einer ersten Zelle (501) eines Rundfunknetzes zu einer zweiten Zelle (502), wobei die erste Zelle auf einer ersten Funkfrequenz funkt und die zweite Zelle auf einer zweiten, zur ersten Funkfrequenz unterschiedlichen Funkfrequenz funkt, wobei die erste und zweite Empfangsfrequenz den ersten bzw. zweiten Funkfrequenzen entsprechen, **dadurch gekennzeichnet, dass** sie mindestens drei Schritte der Bestimmung des Modus der Schätzung der von dem Netz gefunkten Daten einsetzt, wenn das System in der ersten Zelle lokalisiert ist, wenn das System in einer Überlappungszone der ersten und zweiten Zellen lokalisiert ist, bzw. wenn das System in der zweiten Zelle lokalisiert ist.

13. Empfangsendgerät (20), umfassend ein System, umfassend mindestens zwei Funkfrequenzempfänger (RX1, RX2), die auf eine erste Empfangsfrequenz bzw. eine zweite Empfangsfrequenz abgestimmt sind, wobei die erste und die zweite Empfangsfrequenz unterschiedlich sind, **dadurch gekennzeichnet, dass** es eine Vorrichtung (200) nach Anspruch 11 zur Bestimmung des Modus der Schätzung der von dem System empfangenen Daten umfasst.

## Claims

1. Method for determining an estimation mode of data received by a system comprising at least two radio frequency receivers (RX1, RX2) respectively tuned to a first reception frequency and to a second reception frequency, said first and second reception frequencies being distinct,
**characterized in that** it comprises a step (E30) of determining the estimation mode of said received data, delivering a decision to recombine, for the estimation of said received data, a first and a second signals transposed in baseband delivered respectively by said at least two radio frequency receivers, said decision taking into account at least a first (IQ1) and a second (IQ2) quality information associated to a signal received respectively on said first and second reception frequencies, said decision to recombine corresponding to a decision indicating that the estimation of said received data is based on:
• a recombination of said first and second signals transposed in baseband if said first quality information is above a first low threshold and if said second quality information is above a second low threshold;
• said second signal transposed in baseband if said first quality information is lower than or equal to said first low threshold and if said second quality information is above said second low threshold;
• said first signal transposed in baseband if said first quality information is above said first low threshold and if said second quality information is lower than or equal to said second low threshold.

2. Method for the determination of the estimation mode of claim 1 wherein said decision to recombine is updated and corresponds to a decision indicating that the estimation of said received data is based on:
• said first signal transposed in baseband if said first quality information is above a first high threshold and if said second quality information is lower than or equal to a second high threshold;
• said second signal transposed in baseband if said second quality information is above said second high threshold and if said first quality information is lower than or equal to said first high threshold;
• on a signal transposed in baseband on which the estimation of said received data was based following a previous execution of said step of determining the estimation mode mode of said received data if said first and second quality information are respectively above said first and second high thresholds.

3. Method for the determination of the estimation mode mode according to any one of the preceding claims further comprising, if said first or second quality information is lower than or equal to said first or second low threshold, a step of transmission, to said first or second radio frequency receiver, of scanning information of at least one frequency different from said first or second reception frequency.

4. Method for the determination of the estimation mode according to any one of the preceding claims wherein when said decision to recombine corresponds to a recombination decision, said recombination corresponds to a maximum ratio recombination of said signals transposed in baseband.

5. Method for switching the reception without service interruption of a system comprising at least two radio frequency receivers (RX1, RX2) tuned respectively to a first reception frequency and to a second reception frequency, said first and second reception frequencies being distinct, said method being implemented during the transition of said system from a first cell (501) of a broadcasting network to a second cell (502) of said network, said first cell broadcasting on a first broadcasting frequency and said second cell broadcasting on a second broadcasting frequency distinct from said first broadcasting frequency, **characterized in that** it comprises:
• at least three steps of determination (E30) of the estimation mode of the data broadcast by said network according to any of claims 1 to 4, said three steps of determination of the estimation mode being implemented successively respectively when said system is located in said first cell, when said system is located in an overlap area of said first and second cells and when said system is located in said second cell and three stages of estimation of said data, said first and second reception frequencies corresponding to said first and second diffusion frequencies respectively,
• at least three estimation steps (E50) of said received data taking into account respectively the recombination decisions made during said three the estimation mode determination steps.

6. Switching method according to claim 5 wherein said tuning frequencies belong to the group comprising:
• pre-programmed frequencies in said system;
• frequencies signalled by said network.

7. Switching method according to any one of claims 5 or 6 wherein the data broadcast by said network in said first and second cells are synchronized in time.

8. Switching method according to any one of claims 5 to 7 wherein said network is a digital video broadcasting network of the "multi-frequency network" type.

9. Computer program product, comprising program code instructions for implementing a method according to at least one of claims 1 to 8, when said program is executed on a computer.

10. Non-transitory computer-readable storage medium storing a computer program product according to claim 9.

11. Device (200) for the determination of the estimation mode of data received by a system comprising at least two radio frequency receivers (RX1, RX2) tuned respectively to a first reception frequency and to a second reception frequency, said first and second reception frequencies being distinct,
**characterized in that** it comprises means for determining (602) the estimation mode of said received data providing a decision to recombine, for the estimation of said received data, first and second signal in transposed baseband delivered respectively by said at least two radio frequency receivers, said decision taking into account at least a first (IQ1) and a second (IQ2) quality information associated with a signal received on said first and second reception frequencies respectively, and said decision indicating that the estimation of said received data is based on:
• a recombination of said first and second signals transposed in baseband if said first quality information is above a first low threshold and if said second quality information is above a second low threshold;
• said second signal transposed in baseband if said first quality information is lower than or equal to said first low threshold and if said second quality information is above said second low threshold;
• said first signal transposed in baseband if said first quality information is above said first low threshold and if said second quality information is lower than or equal to said second low threshold.

12. Use of a device (200) according to claim 11 for reception switching without service interruption when moving said system from a first cell (501) of a broadcast network to a second cell (502) of said network, said first cell broadcasting on a first broadcasting frequency and said second cell broadcasting on a second broadcasting frequency distinct from said first broadcasting frequency, said first and second reception frequencies corresponding to said first and second scattering frequencies respectively, **characterized in that** it implements at least three steps of determination of the estimation mode of the data diffused by said network, respectively when said system is located in said first cell, when said system is located in an overlapping zone of said first and second cells and when said system is located in said second cell.

13. Receiver terminal (20) comprising a system comprising at least two radio frequency receivers (RX1, RX2) tuned respectively to a first and a second reception frequency, said first and second reception frequencies being distinct,
**characterized in that** it comprises a device (200) according to claim 11 for the determination of the estimation mode of the data received by said system.
